## Europäisches Patentamt
## European Patent Office
## Office européen des brevets

(19)

(11) Numéro de publication: **0 100 705**
**B1**

(12) # FASCICULE DE BREVET EUROPÉEN

(45) Date de publication du fascicule du brevet:
**23.09.87**

(51) Int. Cl.⁴: **B 32 B 17/10**

(21) Numéro de dépôt: **83401395.5**

(22) Date de dépôt: **07.07.83**

(54) Verres stratifiés transparents polarisants et leur procédé d'obtention.

(30) Priorité: **27.07.82 FR 8213076**

(43) Date de publication de la demande:
**15.02.84 Bulletin 84/7**

(45) Mention de la délivrance du brevet:
**23.09.87 Bulletin 87/39**

(84) Etats contractants désignés:
**BE DE FR GB IT**

(56) Documents cité:
**EP-A-0 054 491**
**FR-A-2 340 916**
**FR-A-2 398 606**
**FR-A-2 407 898**
**FR-A-2 433 492**

(73) Titulaire: **Corning Glass Works, Houghton Park, Corning New York 14831 (US)**

(72) Inventeur: **Goepfert, Serge Prosper Paul, 2, Rue des Hautes Buternes, F-77200 Samoreau (FR)**
Inventeur: **Guillevic, Gildas Joseph Marie, 4, Rue de Milly, F-77930 Perthes (FR)**

(74) Mandataire: **de Boisse, Louis, CABINET DE BOISSE 37, Avenue Franklin D. Roosevelt, F-75008 Paris (FR)**

LIBER, STOCKHOLM 1987

EP 0 100 705 B1

## Description

La présente invention concerne des verres transparents stratifiés polarisant la lumière et leur procédé d'obtention. Ces verres sont utiles notamment dans le domaine de la lunetterie médicale, ophtalmique, solaire ou de protection, mais pourraient aussi être appliqués dans d'autres domaines, par exemple comme lentilles pour instruments, vitrages pour véhicules de toutes sortes (air, mer, terre), vitrages d'immeubles, etc...

La fabrication de verres polarisants soulève divers problèmes liés à la solubilité des matériaux polarisants (en général des particules polarisantes) dans les milieux environnants (eau, produits chimiques même faiblement concentrés, etc...) ainsi que leur très faible résistance mécanique. Ceci a amené les chercheurs à imaginer divers modes de protection, par exemple en incorporant des particules polarisantes dans un film polymère.

En général, ces produits sont reconnus comme ayant une dureté de surface très faible, une sensibilité à la rayure très marquée et une incompatibilité avec la majorité des produits cosmétiques courants.

Néanmoins, des tentatives d'obtention de verres de lunettes ont consisté à associer un film organique polarisant du type alcool polyvinylique à un ou deux ("sandwich") éléments en verre. Ces tentatives se sont heurtées à plusieurs difficultés telles que:

- la complexité de lier le film polarisant à un substrat optique sans déformer la direction de polarisation comme indiqué dans FR-A-2 317 671 déposé le 22 juin 1976 par la Société American Optical Corporation;
- le poids des assemblages ainsi obtenus peu compatibles avec, par exemple, les lentilles traditionnelles utilisées en lunetterie (10 à 25 grammes);
- le coût extrêmement élevé, lié à leur complexité, de tels produits.

Pour ces raisons, ces produits ne sont plus employés pour des applications du type "grand public" comme celui de la lunetterie.

Plus récemment, des tentatives ont été conduites à partir de films polarisants du type acétate de polyvinyle ou butyrate de polyvinyle fixés sur la face concave d'un verre de lunetterie minéral. Cette approche s'est également révélée infructueuse en raison de deux difficultés majeures:

- la très mauvaise qualité optique de tels films,
- la nécessité de les protéger de l'humidité,
- leur rayabilité.

Malgré tous ces handicaps, un produit de ce genre est disponible dans le commerce. Dans ce produit, le matériau polarisant est contenu dans des films de polyvinyle stratifiés recto-verso à des films minces de cellulose et protégés par une mince pellicule de mélamine.

Comme tous les matériaux de ce type, le grand désavantage pour l'usager de ce type de produit est sa très forte sensibilité à la rayure par rapport aux produits traditionnels que sont les verres minéraux.

En plus de cela, tous les produits existants (ou ayant existé) sur le marché ne répondent pas à un besoin actuel des consommateurs qui est celui d'avoir à leur disposition des verres minéraux photochromiques (c'est-à-dire à transmission optique variable avec les conditions d'éclairement) polarisants, colorables et/ou filtrants si besoin est. Un tel produit, pour être parfaitement convenable, ne devrait souffrir aucune limitation sur le plan de la forme et des rayons de courbure afin de satisfaire, sans restriction aucune, tous les besoins de la lunetterie médicale, ophtalmique et de protection.

La présente invention vise à fournir un verre stratifié transparent polarisant qui est exempt des déficiences rappelées ci-dessus et qui permet de satisfaire le besoin sus-mentionné.

Plus précisément, l'invention concerne un verre stratifié transparent polarisant comprenant

a) un support en verre minéral ou organique,

b) un revêtement à propriétés polarisantes déposé sur l'une des faces du support, caractérisé en ce qu'il comprend, en outre:

c) un film composite optiquement transparent et d'un seul tenant, constitué, d'un côté, d'une épaisseur de polyuréthane thermoplastique à propriétés adhésives et, de l'autre côté, d'une épaisseur de polyuréthane thermodurcissable à propriétés anti-lacération et auto-régénérables, le côté polyuréthane thermoplastique adhérant au revêtement à propriétés polarisantes.

Le support (a) peut être constitué d'un verre minéral ou organique de composition et de forme quelconques. Ce peut être notamment un verre à propriétés photochromiques, en particulier une ébauche de verre de lunettes (correctives, solaires ou protectrices).

Le revêtement polarisant (b) peut être de divers types. Un type de revêtement polarisant préféré est formé d'un mélange de trois colorants organiques correspondant aux trois couleurs de base bleu-rouge-jaune et présentant un état nématique. Les molécules de colorants sont orientées spontanément sur le support de base grâce à un pré-alignement créé par un brossage parallèle très légèrement abrasif de la surface du support à revêtir. Ce brossage crée des microsillons parallèles de très faibles profondeur et largeur (inférieures à 0,5 μm). Le revêtement obtenu présente un effet dichroïque voisin de 10 et une forte solubilité dans l'eau. On réduit cette solubilité à l'eau par un traitement de stabilisation de surface à l'aide d'une solution aqueuse de sels minéraux d'un pH acide. Des colorants organiques appropriés sont vendus notamment par la Société 3M, à St Paul, Minnesota, E.U.A., sous la dénomination commerciale "3M Vari-light 2S".

Des enseignements concernant ce type de revêtement polarisant pourront aussi être trouvés dans les brevets US-A-2 544 659 et 2 481 830.

L'invention concerne donc aussi un procédé d'obtention d'un tel verre stratifié transparent polarisant préféré qui comprend les étapes suivantes:

- une formation de microsillons parallèles sur le support en verre minéral ou organique devant recevoir le revêtement polarisant à l'aide d'un brossage très légèrement abrasif dudit support,
- un lavage soigneux de la surface du support devant recevoir le revêtement polarisant, et un séchage de cette surface,
- le dépôt sur la surface lavée et séchée du support d'un mélange de trois colorants organiques correspondant aux trois couleurs de base et présentant un état nématique,
- un traitement du revêtement polarisant résultant par immersion dans une solution aqueuse de sels minéraux à un pH acide afin de réduire la solubilité à l'eau dudit revêtement polarisant, caractérisé en ce qu'il comprend, en outre: l'application du côté polyuréthane thermoplastique, d'un film composite optiquement transparent et d'un seul tenant, constitué, d'un côté, d'une épaisseur de polyuréthane thermoplastique à propriétés adhésives et, de l'autre côté, d'une épaisseur de polyuréthane thermodurcissable à propriétés anti-lacération et auto-régénérables en le soumettant d'abord à des conditions de température et pression modérées afin d'assurer un étalement exempt de pli et progressif et une adhérence du film sur le revêtement polarisant, puis à des conditions de température et pression élevées pour renforcer la liaison mécanique entre le film et le revêtement et achever la réticulation du film composite.

Le film composite (c) est avantageusement constitué du film composite décrit dans le brevet GB-A-1 576 394 (correspondant à FR-A-2 398 606).

Selon un mode de réalisation préféré, le polyuréthane thermoplastique du film est formé à partir d'un diisocyanate aliphatique et d'un diol d'un polyester de diacide aliphatique ou d'un diol d'un polyglycol-éther, chacun desdits diols présentant un poids moléculaire de 500 à 4000, et ledit polyuréthane thermodurcissable étant le produit (a) d'un polyglycol-éther résultant de la combinaison de l'époxy-1,2 propane avec le 2,2-bis(hydroxyméthyl)-1-butanol et contenant 10,5 à 12 % en poids d'hydroxyles libres, et (b) d'un biuret de 1,6-hexaméthylène diisocyanate contenant 21 à 22 % en poids de groupes isocyanate, le poids dudit biuret étant compris entre 0,9 et 1,1 fois le poids dudit polyglycol-éther, l'épaisseur de polyuréthane thermoplastique allant de 0,01 à 0,8 mm et l'épaisseur de polyuréthane thermodurcissable allant de 0,2 à 0,8 mm.

L'application de ce film composite (c) sur le revêtement polarisant (b) s'opère par application de chaleur et pression, comme décrit plus en détail plus loin.

Une fois le verre stratifié transparent à trois plis a-b-c réalisé, on peut le soumettre aux opérations de finition éventuellement nécessaires. Ainsi, dans le cas où le verre stratifié est une ébauche de verre de lunettes, il peut être soumis à l'opération dite "de débordage" (usinage du contour afin de mettre le verre à la forme de la monture sur laquelle il doit être fixé).

Cette opération de débordage a pour inconvénient de rompre la couche superficielle de stabilisation formée sur le revêtement polarisant au niveau de la tranche du verre de sorte qu'il existe un risque que de l'humidité puisse s'infiltrer dans le stratifié et entraîne à terme une destruction de la couche polarisante par décollement comme des tests de résistance aux agents atmosphériques l'ont montré. Afin de surmonter cette difficulté, il est loisible, selon l'invention, de protéger la tranche du verre, après débordage de celui-ci, par un revêtement de résine que l'on polymérise in situ.

Les verres stratifiés de l'invention présentent des effets de polarisation compris entre 50 et 98 % et les transmissions optiques sous 2 mm comprises entre 25 et 45 % en fonction des quantités de molécules polarisantes, de leur organisation et de leur effet dichroïque. Ces produits sont parfaitement conformes à toutes les normes en vigueur dans le domaine de la lunetterie.

Il convient de noter, en outre, que les verres stratifiés de l'invention peuvent ensuite être colorés, si désiré, par le procédé décrit dans FR-A-2 517 712 déposé par la Demanderesse le 4 Décembre 1981. On a ainsi la possibilité de produire facilement des produits nouveaux et désirables, à savoir des verres photochromiques polarisants facilement teintables pouvant couper le rayonnement ultra-violet et avoir les formes et courbures les plus variées sans aucune contrainte.

Enfin, si dans la présente demande, il est fait référence plus spécialement à un verre stratifié destiné à la lunetterie, cette application n'est nullement limitative. En effet, un tel verre peut parfaitement trouver application dans d'autres domaines, par exemple comme vitrages pour véhicules (automobiles, bateaux, camions) ou pour bâtiments, ou comme fenêtres de lecture d'indicateurs digitaux utilisés en électronique, instrumentation ou horlogerie sous le vocable "affichage à cristaux liquides". De façon générale, l'invention est utile dans tous domaines où la polarisation de la lumière incidente ou réfléchie peut apporter un confort ou des possibilités techniques accrues aux utilisateurs.

La description qui va suivre en regard des dessins annexés, donnés à titre d'exemples non limitatifs, fera bien comprendre comment l'invention peut être réalisée, les particularités qui ressortent tant des dessins que du texte faisant, bien entendu, partie de ladite invention.

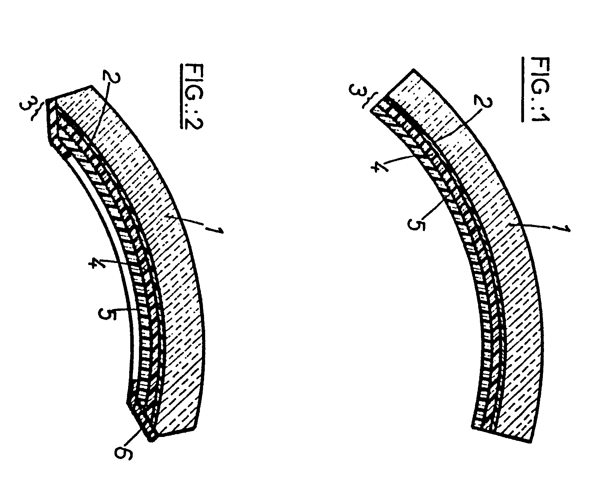

La figure 1 est une vue en coupe transversale d'un verre polarisant stratifié selon l'invention; et la figure 2 est une vue schématique illustrant la protection de la tranche d'un verre de lunettes selon l'invention par un revêtement de résine polymérisée.

Sur la figure 1, on voit un verre polarisant stratifié selon l'invention, plus précisément une ébauche de verre de lunettes usinée selon les spécifications optiques requises, constitué d'un support 1 en verre minéral ou organique, doué ou non de propriétés photochromiques, d'un revêtement polarisant 2 déposé sur la face concave du support, et d'un film composite 3 optiquement transparent, d'un seul tenant, constitué d'une épaisseur 4 de polyuréthane thermoplastique à propriétés adhésives et d'une épaisseur 5 de polyuréthane thermodurcissable à propriétés anti-lacération et auto-régénérables, le polyuréthane thermoplastique adhérant au revêtement 2.

Sur la figure 2, on voit un verre de lunettes mis à la forme voulue par débordage de l'ébauche de la figure 1. Ce verre est pourvu sur sa tranche d'un revêtement 6 de résine polymérisée in situ destinée à le protéger contre les infiltrations d'eau.

Un verre de support doué de propriétés photochromiques constitue un mode de réalisation préféré.

On donne ci-après un exemple non limitatif illustrant l'invention:

**Exemple:**

L'application du revêtement polarisant sur un support en verre minéral photochromique est effectué comme suit, en huit phases

- Phase 1: Préparation de la surface:
Cette étape a pour but de permettre un pré-alignement des molécules organiques à déposer par un brossage très légèrement abrasif de la surface à recouvrir. On peut utiliser par exemple, à cette fin, un disque rotatif épais, de préférence en mousse de polyester imprégné d'un abrasif, comme un oxyde du type zircone ($ZrO_2$) ou de préférence alumine ($Al_2O_3$) en suspension dans de l'eau. La tranche du disque est appliquée contre la surface de façon à former des microsillons parallèles dans celle-ci. La durée de cette opération peut aller, à titre indicatif, de 3 à 30 secondes en fonction de la dureté superficielle du support à recouvrir, 10 secondes étant habituellement suffisantes pour les verres minéraux.

- Phase 2: 1er lavage de surface:
Cette opération a pour but de débarrasser la surface des résidus d'oxyde minéraux utilisés à l'étape précédente. On peut l'effectuer, par exemple, par brossage de la surface avec un équipement similaire à l'étape précédente mais dans lequel l'abrasif en suspension a été remplacé par de l'eau naturelle à température ambiante. Cette opération dure, par exemple, de 10 à 30 secondes.

- Phase 3: 2ème lavage de la surface:
Cette opération a pour but de préparer chimiquement la surface à recouvrir en lui conférant un haut niveau de propreté. Dans cette opération, le support, de préférence soumis à un mouvement de rotation horizontal (par exemple à 500 tours/minute) est arrosé en permanence d'eau désionisée d'une résistivité de 10 à 17 x 10⁶ Ω-cm contenant ou pas, en fonction du support, une petite proportion d'un agent tensio-actif (alcool à 1 % en volume par exemple). La durée de cette opération est, par exemple, de l'ordre de 5 à 10 secondes.

- Phase 4: Séchage de la surface:
On sèche la surface du support, préalablement préparée par rinçage très propre, par exemple par exposition du support entraîné en rotation sous une lampe I.R. de 75 watts pendant quelques secondes (par exemple 5 à 10 secondes).

- Phase 5: Stabilisation du support:
Dans cette opération, le support à recouvrir est stabilisé en température et humidité pendant environ 1 mn 30 dans une enceinte à 30°C ± 1°C et 50 % d'humidité + 5 %. La même enceinte est utilisée pour la phase suivante.

- Phase 6: Dépôt du revêtement polarisant:
Dans cette phase, les molécules organiques du type "nématique" constituées d'un mélange de trois colorants azoïques de base (bleu - rouge - jaune) en solution dans de l'eau sont déposées et orientées. La proportion des 3 colorants (vendus par la Société 3M sous la dénomination "3 M Vari-light 2S") est détérminée de façon à obtenir un effet polarisant maximum lié à la formation de cristaux allongés dans un domaine très précis de température et d'humidité (30°C ± 1°C et 5 % ± d'humidité relative). Le revêtement résultant a une couleur gris clair. Est généralement associé au mélange de colorants un mouillant légèrement alcalin dont le rôle est de favoriser la formation d'agrégats de molécules organiques. Les concentrations de mouillant conseillées sont de l'ordre de quelques %, de préférence 1 à 2 % en volume.

Dans cette phase, le support est aspergé de la solution de molécules organiques à raison de 1,5 à 5 ml environ de liquide pour un support de diamètre compris entre 50 et 80 mm. Le support est entraîné en rotation horizontale, par exemple à 1000 tours/minutes, pendant, par exemple, 30 à 45 secondes, afin d'orienter les molécules organiques selon le pré-alignement généré précédemment par brossage et évaporer par centrifugation le solvant de la solution initiale. Le dépôt ainsi obtenu présente un effet dichroïque voisin de 10 et une forte solubilité dans l'eau. La quantité de la solution de molécules organiques et la vitesse de centrifugation confèrent au support un niveau d'effet de polarisation pouvant être compris entre 90 % et 50 % pour des transmissions optiques à 550 nanomètres comprises entre 25 et 45 %.

- Phase 7: Traitement de stabilisation de la surface:
Cette étape a pour but de réduire la solubilité l'eau du revêtement polarisant préalablement formé. Pour cela, les supports sont traités par immersion pendant 10 secondes dans une solution aqueuse de sels minéraux ayant un pH acide (par exemple 3,2). Comme sels minéraux, on emploie généralement des sels de Pb ou des sels de Ba ou des sels de Fe et de Ca mélangés en solution aqueuse. Il se produit en surface une diffusion ionique avec formation, molécules de colorants organiques, d'un sulfonate, avec les metallique insoluble dans l'eau. D'autres sels utilisables sont décrits dans les brevets des E.U.A. précités.

- Phase 8: Dernier rinçage de la surface:

Dans cette étape, le produit obtenu est rince par immersion totale dans de l'eau naturelle à température ambiante.

La lentille réalisée est polarisante et le traitement de surface opéré confère superficiellement au revêtement polarisant une insensibilité à l'eau efficace.

L'application du film composite de polyuréthanes peut s'effectuer comme décrit dans le brevet britannique précité mais est de préférence réalisée comme décrit dans FR-A-2 513 940 déposé le 5 Octobre 1981 par la Demanderesse pour "Verre ophtalmique stratifié, et son procédé de fabrication" si ce n'est que l'opération de nettoyage de la lentille de verre est omise. Brièvement, ce procédé consiste à placer le côté polyuréthane thermoplastique du film composite au contact du revêtement polarisant porté par le support, à presser le film composite contre ledit revêtement à la température ambiante ou à une température modérément élevée (40-80°C par exemple) et sous une pression modérément élevée (3 à 5 bars par exemple) afin d'assurer un étalement exempt de pli et uniformément progressif et une adhérence du film sur le revêtement, puis à soumettre le stratifié résultant à des températures et pressions élevées (75-150°C et 5-25 bars par exemple) pendant une durée suffisante (0,5 à 4 heures par exemple) pour renforcer la liaison mécanique entre le film composite et le revêtement polarisant et en éliminer les inclusions gazeuses.

L'ébauche de verre de lunettes stratifiée résultante peut être soumise, si nécessaire, au débordage. Ce dernier est effectué sur une ébauche préalablement chauffée à 110° ± 10°C pendant 30 minutes environ afin d'accroître temporairement l'adhérence du revêtement polarisant au film composite.

Après débordage, on applique sur la tranche du verre de lunettes, afin de protéger physiquement le revêtement polarisant contre une éventuelle infiltration d'eau, une mince couche de résine organique polymérisable in situ. On peut utiliser par exemple une résine polymérisable par des rayons ultra-violets telle que la résine LOCTITE® 350 vendue en France par la Société FRAMET à Senlis. Un traitement de 5 secondes avec une lampe U.V. au xénon de 1500 watts suffit pour durcir cette résine.

Le revêtement protecteur de résine polymérisée a une épaisseur de quelques centièmes de mm et est parfaitement transparent et incolore. Le verre terminé obtenu peut alors être monté en lunettes sans aucune crainte de détérioration, comme l'ont montré des tests de plus de 252 heures à 50°C et 98 % d'humidité relative en enceinte climatique, suivis d'une immersion prolongée dans l'eau (plusieurs semaines).

## Revendications

1. Verre stratifié transparent polarisant comprenant
   a) un support (1) en verre minéral ou organique,
   b) un revêtement (2) à propriétés polarisantes déposé sur l'une des faces du support,
   caractérisé en ce qu'il comprend, en outre:
   c) un film composite (3) optiquement transparent et d'un seul tenant, constitué, d'un côté, d'une épaisseur de polyuréthane thermoplastique (4) à propriétés adhésives et, de l'autre côté, d'une épaisseur (5) de polyuréthane thermodurcissable à propriétés anti-lacération et autorégénérables, le côté polyuréthane thermoplastique adhérant au revêtement à propriétés polarisantes.

2. Verre stratifié selon la revendication 1, caractérisé en ce que le support est un verre à propriétés photochromiques.

3. Verre stratifié selon la revendication 1 ou 2, caractérisé en ce que le revêtement polarisant est formé d'un mélange de trois colorants organiques correspondant aux trois couleurs de base bleu-rouge-jaune et présentant un état nématique, ledit revêtement polarisant ayant une solubilité à l'eau réduite comme résultat d'un traitement par une solution aqueuse acide de sels minéraux.

4. Verre stratifié selon l'une quelconque des revendications 1 à 3, caractérisé en ce que, dans le film composite, le polyuréthane thermoplastique est formé à partir d'un diisocyanate aliphatique et d'un diol d'un polyester de diacide aliphatique ou d'un diol d'un polyglycol-éther, chacun desdits diols présentant un poids moléculaire de 500 à 4000, et le polyuréthane thermodurcissable est le produit (a) d'un polyglycoléther résultant de la combinaison de l'époxy-1,2-propane avec le 2,2-bis (hydroxyméthyl)-1-butanol et contenant 10,5 et 12 % en poids d'hydroxyles libres, et (b) d'un biuret de 1,6-hexaméthylène diisocyanate contenant 21 à 22 % en poids de groupes isocyanate, le poids dudit biuret étant compris entre 0,9 et 1,1 fois le poids dudit polyglycol-éther, l'épaisseur de polyuréthane thermoplastique allant de 0,01 à 0,8 mm et l'épaisseur de polyuréthane thermodurcissable allant de 0,2 à 0,8 mm.

5. Verre stratifié selon l'une quelconque des revendications 1 à 4, caractérisé en ce que le film composite a été soumis à un traitement de coloration.

6. Verre stratifié selon l'une quelconque des revendications 1 à 5, sous la forme d'un verre de lunettes ayant été soumis à une opération de débordage, caractérisé en ce que la tranche de ce verre a été revêtue d'un revêtement de résine polymérisée in situ.

7. Procédé d'obtention d'un verre stratifié tel que défini à la revendication 3, qui comprend les étapes suivantes:

- une formation de microsillons parallèles sur le support en verre minéral ou organique devant recevoir le revêtement polarisant à l'aide d'un brossage très légèrement abrasif dudit support,

- un lavage soigneux de la surface du support devant recevoir le revêtement polarisant, et un séchage de cette surface,

- le dépôt sur la surface lavée et séchée du support d'un mélange de trois colorants organiques correspondant aux trois couleurs de base et présentant un état nématique,

- un traitement du revêtement polarisant résultant par immersion dans une solution aqueuse de sels minéraux à un pH acide afin de réduire la solubilité à l'eau dudit revêtement polarisant, caractérisé en ce qu'il comprend, en outre: l'application du côté polyuréthane thermoplastique d'un film composite (3) optiquement transparent et d'un seul tenant, constitué, d'un côté, d'une épaisseur de polyuréthane thermoplastique (4) à propriétés adhésives et, de l'autre côté, d'une épaisseur (5) de polyuréthane thermodurcissable à propriétés anti-lacération et auto-régénérables, en le soumettant d'abord à des conditions de température et pression modérées afin d'assurer un étalement exempt de pli et progressif et une adhérence du film sur le revêtement polarisant, puis à des conditions de température et pression élevées pour renforcer la liaison mécanique entre le film et le revêtement et achever la réticulation du film composite.

8. Procédé selon la revendication 7 pour l'obtention du verre stratifié selon la revendication 6, caractérisé en ce qu'il comprend l'étape supplémentaire consistant à appliquer, après débordage, une résine polymérisable par des rayons ultra-violets sur la tranche du verre stratifié, puis à exposer la couche de résine à des rayons ultra-violets pour provoquer le durcissement de la résine.

**Patentansprüche**

1. Transparentes und polarisierendes beschichtetes Glas, umfassend

a) einen Träger (1) aus mineralischem oder organischem Glas,

b) einen auf eine der Seiten des Trägers aufgebrachten Belag (2) mit polarisierenden Eigenschaften,

dadurch gekennzeichnet, daß es außerdem umfaßt

c) einen optisch transparenten und in einem Stück vorliegenden Mehrkomponentenfilm (3), bestehend auf einer Seite aus einer Schicht aus thermoplastischem Polyurethan (4) mit Hafteigenschaften und auf der anderen Seite aus einer Schicht (5) aus hitzehärtbarem Polyurethan mit reißfesten und selbstregenerierbaren Eigenschaften, wobei die Seite aus thermoplastischem Polyurethan am Belag mit polarisierbaren Eigenschaften haftet.

2. Beschichtetes Glas nach Anspruch 1, dadurch gekennzeichnet, daß der Träger ein Glas mit photochromen Eigenschaften ist.

3. Beschichtetes Glas nach Anspruch 1 oder 2, dadurch gekennzeichnet, daß der polarisierende Belag aus einem Gemisch von drei organischen Farbstoffen, die den drei Grundfarben blau-rotgelb entsprechen und einen nematischen Zustand aufweisen, gebildet wird und als Folge einer Behandlung mit einer wäßrigen sauren Lösung von Mineralsalzen eine verringerte Löslichkeit in Wasser aufweist.

4. Beschichtetes Glas nach irgendeinem der Ansprüche 1 bis 3, dadurch gekennzeichnet, daß im Mehrkomponentenfilm das thermoplastische Polyurethan aus einem aliphatischen Diisocyanat und einem Diol eines Polyesters einer aliphatischen Dicarbonsäure oder einem Diol eines Polyglykolethers gebildet ist, wobei jedes der genannten Diole ein Molekulargewicht von 500 bis 4000 hat, und das hitzehärtbare Polyurethan das Produkt von a) einem Polyglykolether, der sich durch Verknüpfung von Epoxy-1,2-propan mit 2,2-Bis(hydroxymethyl)-1-butanol ergibt und 10,5 bis 12 Gew.-% freie Hydroxylgruppen enthält, und b) einem Biuret von 1,6-Hexamethylen-diisocyanat ist, das 21 bis 22 Gew.-% Isocyanatgruppen enthält, wobei das Gewicht des Biurets zwischen dem 0,9- bis 1,1-fachen Gewicht des Polyglykolethers liegt und die Schicht aus thermoplastischem Polyurethan 0,01 bis 0,8 mm dick ist und die Dicke der Schicht aus hitzehärtbarem Polyurethan 0,2 bis 0,8 mm beträgt.

5. Beschichtetes Glas nach irgendeinem der Ansprüche 1 bis 4, dadurch gekennzeichnet, daß der Mehrkomponentenfilm einer Färbungsbehandlung unterworfen worden ist.

6. Beschichtetes Glas nach irgendeinem der Ansprüche 1 bis 5 in Form eines Brillenglases, das einem Arbeitsgang der Randbearbeitung unterworfen worden ist, dadurch gekennzeichnet, daß die Scheibe dieses Glases mit einem Überzug aus einem in situ polymerisierten Harz beschichtet worden ist.

7. Verfahren zur Herstellung eines beschichteten Glases, wie es in Anspruch 3 definiert ist, umfassend die folgenden Stufen:

Bildung von parallelen Mikrorillen auf dem Träger aus anorganischem oder organischem Glas, das den polarisierenden Belag aufnehmen soll, durch ganz leichtes schleifendes Bürsten des Trägers,

sorgfältiges Waschen der Oberfläche des Trägers, der den polarisierenden Belag aufnehmen soll, und Trocknen dieser Oberfläche, Aufbringen eines Gemisches von drei organischen Farbstoffen, die den drei Grundfarben entsprechen und einen nematischen Zustand aufweisen, auf die gewaschene und getrocknete Oberfläche des Trägers,

Behandlung des polarisierenden Belages durch Eintauchen in eine wäßrige Lösung von anorganischen Salzen bei einem sauren pH-Wert, um die Wasserlöslichkeit des polarisierenden Belages zu verringern, dadurch gekennzeichnet, daß das Verfahren außerdem umfaßt: Aufbringen mit der Seite des thermoplastischen Polyurethans eines optisch transparenten, in einem Stück vorliegenden Mehrkomponentenfilms, der auf einer Seite aus einer Schicht (4) von thermoplastischem Polyurethan mit Hafteigenschaften und auf der anderen Seite einer Schicht (5) aus hitzehärtbarem Polyurethan mit Reißfestigkeits- und Selbstregenerierungseigenschaften besteht, indem man ihn zuerst mäßigen Temperatur- und Druckbedingungen unterwirft, um faltenfreies und fortlaufendes Ausbreiten und das Haften des Films auf dem polarisierenden Belag zu gewährleisten, und dann verstärkten Temperatur- und Druckbedingungen unterwirft, um die mechanische Bindung zwischen dem Film und dem Belag zu verstärken und die Vernetzung des Verbundfilms zu erreichen.

8. Verfahren nach Anspruch 7 zur Herstellung von beschichtetem Glas nach Anspruch 6, dadurch gekennzeichnet, daß es die zusätzliche Stufe umfaßt, die darin besteht, daß man nach der Randbearbeitung ein mit UV-Strahlen polymerisierbares Harz auf die Scheibe des beschichteten Glases aufbringt und dann die Harzschicht UV-Strahlen aussetzt, um die Härtung des Harzes zu bewirken.

**Claims**

1. A laminated, transparent, polarizing glass article comprising:
   (a) a support (1) of inorganic or organic glass;
   (b) a coating (2) exhibiting polarizing properties deposited on one face of said support,
   characterized in that it further comprises
   (c) a continuous, optically transparent composite film (3) consisting, on one side, of a lager of thermoplastic urethane (4) having adhesive properties and, on the other side, a lager (5) of thermosetting polyurethane having anti-lacerating and self-healing properties, said thermoplastic polyurethane lager being adhered to said coating exhibiting polarizing properties.

2. A laminated glass article according to claim 1, characterized in that said support is a glass displaying photochromic properties.

3. A laminated glass article according to claim 1 or 2, characterized in that said polarizing coating is comprised of a mixture of three organic colorants corresponding to the three primary blue - red - yellow colors and exhibiting a nematic state, said polarizing costing having a reduced water-solubility as a result of a treatment with an aqueous acid solution of inorganic salts.

4. A laminated glass article according to any of claims 1 to 3, characterized in that, in said composite film, the thermoplastic polyurethane is formed from an aliphatic diisocyanate and an aliphatic diacid polyester diol or a polyglycol ether diol, each of said diols having a molecular weight of 500-4000, and the thermosetting polyurethane is the product (a) of a polyglycol ether resulting from the combination of epoxy-1,2 propane with 2,2-bis(hydroxymethyl) 1-butanol and containing 10,5-12 % by weight of free hydroxyls, and (b) of a biuret of 1,6-hexamethylene diisocyanate containing 21-22 % by weight of isocyanate groups, the weight of said biuret being between 0.9-1.1 times the weight of said polyglycol ether, the thickness of the thermoplastic polyurethane layer ranging from 0,01 to 0,8 mm and the thickness of the thermosetting polyurethane layer ranging from 0,2 to 0,8 mm.

5. A laminated glass article according to any of claims 1 to 4, characterized in that said composite film has been subjected to a coloring treatment.

6. A laminated glass article according to any of claims 1 to 5, in the form of a spectacle lens which has been subjected to an edging operation, characterized in that the edge of said lens has been coated with a coating of resin which has been polymerized in situ.

7. A process for making a laminated glass article such as defined in claim 3, which comprises the following steps:
   - forming parallel microgrooves on the support of or organic/inorganic glass to which will be applied the polarizing coating by a very gentle abrasive brushing of said support,
   - carefully washing the surface of the support to which will be applied the polarizing coating and drying said surface,
   - depositing on said washed and dried surface a mixture of three organic colorants corresponding to the three primary colors and exhibiting a nematic state,
   - treating the resulting polarizing coating by dipping in an aqueous solution of inorganic salts having an acid pH to reduce the water solubility of said polarizing coating, characterized in that it further comprises: applying the thermoplastic polyurethane side of, a continuous, optically transparent, composite film (3) consisting, on one side, of a layer of thermoplastic polyurethane (4) having adhesive properties and, on the other side, of a layer of thermosetting polyurethane having anti-lacerating and self-healing properties by first subjecting it to moderate temperature and pressure conditions in order to insure a wrinkle-free and gradual spreading out and an adherence of the film upon the polarizing coating, and then subjecting it to elevated temperature and pressure conditions to reinforce the mechanical bond between the film and the coating and to complete the cross-linking of the composite film.

8. A process according to claim 7 for making the laminated glass article of claim 6, characterized in that it comprises the further step consisting of applying, after edging, an U.V.-polymerizable resin on the edge of the laminated glass article, then exposing the resin layer to U.V.-radiations for causing said resin to cure.

FIG.:1

FIG.:2